# EUROPÄISCHE PATENTSCHRIFT

(11) **EP 0 983 431 B1**
(45) Veröffentlichungstag und Bekanntmachung des Hinweises auf die Patenterteilung: **31.10.2001**
(21) Anmeldenummer: 98919053.3
(22) Anmeldetag: 06.03.1998
(51) Int. Cl.: F02F 3/00, F16J 1/00

(54) **SCHRAUBENANORDNUNG BEI GEBAUTEN KOLBEN**
CLAMPING DEVICE FOR A PISTON TO BE MOUNTED
SYSTEME DE SERRAGE POUR PISTON A MONTER

(30) Priorität: 20.05.1997 DE 19721013
(43) Veröffentlichungstag der Anmeldung: 08.03.2000
(73) Patentinhaber: MAHLE GMBH, D-70376 Stuttgart (DE)
(72) Erfinder: BARTH, Alois, D-70374 Stuttgart (DE); FUCHS, Reinhold, D-70736 Fellbach (DE); MESSMER, Dieter, D-70378 Stuttgart (DE)
(74) Vertreter: Hunekohl, Martin
(86) Internationale Anmeldenummer: DE9800675
(87) Internationale Veröffentlichungsnummer: WO9853193

(56) Entgegenhaltungen:
- EP-A- 0 237 853
- DE-A- 3 527 812
- DE-A- 4 416 120
- GB-A- 1 099 296

## Beschreibung

Die Erfindung betrifft einen gebauten Kolben nach dem Oberbegriff des Anspruchs 1. Ein derartiger Kolben ist aus der DE-OS 34 26 238 bekannt.

Wie aus Fig. 2 dieser Schrift erkennbar ist, sind die zwei Verbindungsschrauben in Druck-Gegendruck-Richtung angeordnet. Diese Bauweise hat sich bei bestimmten hochbelasteten Dieselmotoren wie z.B. Motoren für Lokomotiven oder Jachten bewährt.

Der Nachteil von Zwei-Schrauben-Kolben liegt jedoch darin, daß, verglichen mit Mehr-Schrauben-Kolben, steifere Schrauben verwendet werden müssen und trotzdem die Gesamtvorspannkraft kleiner ist.

Die Erfindung beschäftigt sich daher mit dem Problem, bei einem Kolben mit einer Schraubenanordnung im Wesentlichen in Druck-Gegendruck-Richtung die Gesamtvorspannkraft zu erhöhen und die Verwendung von Schrauben mit höherer Elastizität zu ermöglichen.

Dieses Problem wird gelöst durch eine Ausbildung des Kolbens mit den kennzeichnenden Merkmalen des Anspruchs 1. Vorteilhafte Weiterbildungen sind Gegenstand der Unteransprüche.

Durch die Verwendung von je zwei Schrauben auf der Druck- und auf der Gegendruckseite, die eng nebeneinanderliegend paarweise angeordnet sind, wird eine höhere Gesamtvorspannkraft erzielt und damit eine größere Sicherheit gegen Massenkraft. Dabei beträgt der Minimalabstand zwischen den Mittelachsen einer druckseitig angeordneten Schraube und einer gegendruckseitig angeordneten Schraube 50% des Kolbendurchmessers.

Da elastischere Schrauben verwendet werden können, ergibt sich auch eine größere Sicherheit gegen Lösen.

Die Druckstücke weisen einen deutlich einfacheren Aufbau auf als die üblicherweise verwendeten Druckstücke.
Sie können z. B. als einfache runde Platten mit zwei Bohrungen ausgebildet sein, die an ebenen Auflageflächen der Kolbeninnenform anliegen.

Die Erfindung wird im folgenden anhand eines Ausführungsbeispiels beschrieben. Es zeigt:
- Fig. 1: einen erfindungsgemäßen Kolben im Querschnitt
- Fig. 2: einen erfindungsgemäßen Kolben in einer Ansicht von unten.

Der gebaute Kolben 1 besteht aus einem Oberteil 2 aus Stahl und einem Unterteil 3 aus einer Aluminiumlegierung, die mit insgesamt vier, paarweise angeordneten, parallel zur Kolbenachse verlaufenden Schrauben 4 miteinander verbunden sind. Die Schraubverbindungen sind im Wesentlichen in Druck-Gegendruck-Richtung angeordnet. Je ein Schraubenpaar weist ein gemeinsames Druckstück 5 auf.

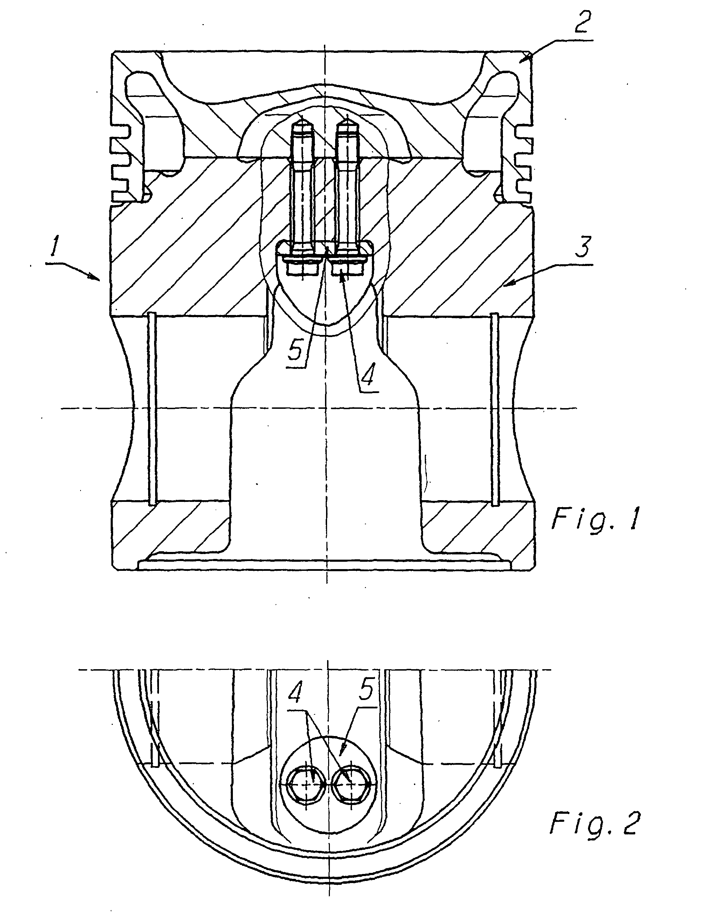

Die Anordnung der Schrauben in Druck-Gegendruck-Richtung kann Fig. 2 entnommen werden.

## Patentansprüche

1. Gebauter Kolben (1) mit einem Oberteil aus Stahl (2) und einem Unterteil (3) aus einem Aluminium- oder einem Eisenwerkstoff, die miteinander verschraubt sind, wobei die Schrauben (4) im Wesentlichen in Druck-Gegendruck-Richtung angeordnet sind und die Schraubenachsen parallel zur Kolbenachse verlaufen, wobei der Minimalabstand zwischen den Mittelachsen einer druckseitig angeordneten Schraube und einer gegendruckseitig angeordneten Schraube 50% des Kolbendurchmessers beträgt,
**dadurch gekennzeichnet,**
**daß** je zwei Schrauben (4) eng nebeneinanderliegend auf der Druckseite und auf der Gegendruckseite des Kolbens (1) angeordnet sind und daß je zwei Schrauben (4) ein gemeinsames Druckstück (5) aufweisen.

2. Gebauter Kolben (1) nach Anspruch 1,
**dadurch gekennzeichnet,**
**daß** die Achsen der vier Schrauben (4) ein Rechteck aufspannen, bei dem das Verhältnis von großer Seitenlänge zu kleiner Seitenlänge größer als 4:1 ist.

3. Gebauter Kolben (1) nach Anspruch 1,
**dadurch gekennzeichnet,**
**daß** der Achsenabstand zwischen den je zwei Schrauben (4) kleiner ist als der dreifache Schraubengewindedurchmesser.

## Claims

1. Assembled piston (1) with a top part made of steel (2) and a bottom part (3) made of an aluminium or an iron material, which are screwed together, the screws (4) being arranged substantially in the pressure/counter-pressure direction and the screw axes extending parallel to the piston axis, the minimum distance between the centre lines of a screw arranged at the pressure side and a screw arranged at the counter-pressure side being 50% of the piston diameter, **characterised in that** two respective screws (4) are arranged close to one another on the pressure side and on the counter-pressure side of the piston (1) and **in that** two respective screws (4) have a common pressure piece (5).

2. Assembled piston (1) according to claim 1, **characterised in that** the axes of the four screws (4) span a rectangle in which the ratio of large lateral length to small lateral length is greater than 4:1.

3. Assembled piston (1) according to claim 1, **characterised in that** the axis spacing between the two respective screws (4) is smaller than three times the screw thread diameter.

## Revendications

1. Piston construit (1), comportant une partie supérieure (2) en acier et une partie inférieure (3) en un matériau d'aluminium ou un matériau ferreux, qui sont vissées ensemble, les vis (4) étant disposées essentiellement dans le sens pression/contre-pression et les axes des vis s'étendant parallèlement à l'axe du piston, l'écartement minimal entre les axes médians d'une vis disposée côté pression et d'une vis disposée côté contre-pression s'élevant à 50% du diamètre du piston, **caractérisé en ce que** deux vis (4) sont disposées étroitement l'une à côté de l'autre sur chacun des côtés pression et contre-pression du piston (1) et que les deux vis (4) d'un même côté présentent une pièce de pression (5) commune.

2. Piston construit (1) selon la revendication 1, **caractérisé en ce que** les axes des quatre vis (4) soustendent un rectangle, dans lequel le rapport du grand côté au petit côté est supérieur à 4:1.

3. Piston construit (1) selon la revendication 1, **caractérisé en ce que** l'entre-axe entre les deux vis (4) d'un même côté est inférieur au triple du diamètre du pas de vis.
